# EUROPEAN PATENT APPLICATION

(11) **EP 2 239 229 A1**
(43) Date of publication of application: **13.10.2010**
(21) Application number: 08867717.4
(22) Date of filing: 24.12.2008
(51) Int. Cl.: C01B 33/12, C01G 23/00, C09C 1/28, C09C 1/36, C09C 3/12, G03G 9/08, G03G 9/087

(54) **SURFACE-MODIFIED COMPLEX OXIDE PARTICLE**

(30) Priority: 28.12.2007 JP 2007340404
(71) Applicant: Nippon Aerosil Co., Ltd., Shinjuku-ku Tokyo 163-0913 (JP)
(72) Inventor: KANEEDA, Masanobu, Yokkaichi-shi Mie 510-0841 (JP); INOUE, Akira, Yokkaichi-shi Mie 510-0841 (JP); BRANDL, Paul, Yokkaichi-shi Mie 510-0841 (JP)
(74) Representative: Schwahn, Hartmut
(86) International application number: PCT/JP2008/003924
(87) International publication number: WO 2009/084184

(57) **Abstract**

Disclosed are particles which are useful as an external toner additive which can control physical properties of a toner. Specifically disclosed are surface-modified complex oxide particles which are obtained by surface-modifying silica-titania complex oxide particles produced by a dry process.

## Description

### Technical field

The present invention concerns surface-modified complex oxide particles obtained by surface-modifying silica-titania complex oxide particles as well as application of the said surface-modified complex oxide particles.

### Background art

OA equipment such as copying machines, laser printers, etc. utilizing electrophotographic technology forms images by means of an electrophotographic developer. Usual electrophotographic developers of two-component system comprise mainly a toner which consists of colored fine resin powders and a carrier which consists of magnetic or nonmagnetic particles serving for electrically charging and carrying the toner. The toner and the carrier are stirred and mixed with each other in a developing machine and are electrically charged as a result of mutual friction while being carried. An electrostatic latent image which has been formed by exposure is developed by the utilization of this charging.

As the toner is in the form of fine powders, its powder characteristics (fluidity, charging characteristics) are also of importance so that it may sufficiently function in the electrophotographic process. Since being 10 µm or larger in particle size, the conventional types of toner could have been managed to handle as they were mere crushed particles. The current types of toner cannot, however, satisfy without various external additives the requirements for the electrophotographic process because they are in the form of fine powders with a particle size between 5 and 9 µm.

External additives which have conventionally been used in general over many years through addition to the toner surface are metal oxide particles such as surface-modified silica, titania, etc. produced by a dry process as they show a low aggregation tendency and are easy to evenly disperse over the toner surface (see Patent reference 1 through 3).
Patent reference 1: Tokukai S58-132757
Patent reference 2: Tokukai S59-34539
Patent reference 3: Tokukai H10-312089

### Disclosure of the patent

### Problem to be solved by the invention

Silica and titania have quite different properties from each other so that the toners with them added may show quite different performance values, respectively, as well. Differences of silica and titania in each property are described in the following:
(Volume resistivity)
   Silica shows an extremely high negative chargeability and a very high volume resistivity. The toner with surface-modified silica added externally acquires, therefore, a high tribo-chargeability. On the other hand, titania and alumina are capable of providing the toner with only a smaller chargeability in comparison with silica. Furthermore, they may sometimes cause leakage of electric charge from the toner with them added owing to their low resistance value. Such a leakage often forms a fatal defect of the toner in the electrophotographic printing process in which a high voltage is used.
(Tolerance to surface modification)
   As being highly reactive, the silanol group on the silica surface easily reacts with hexamethyldisilazane (hereinafter referred to as "HMDS"), silicone oil or silane coupling agents like alkylsilane, aminosilane, etc., to make it relatively easy to obtain an external additive having a high hydrophobicity.

In contrast, titania and alumina indicate less surface reactivity than silica and they cannot easily be hydrophobized through surface modification. Therefore, only limited surface modification agents and conditions are available for them. In other words, they have a narrow range of property adjustment against surface modification. Incidentally, hydrophobicity is one of the properties indispensable to the external toner additive. For example, HMDS is one of the surface modifying agents which are most generally used for silica surface modification. By reaction with the surface of inorganic oxide, HMDS trimethylsilylates the surface hydroxyl group. A surface modification of titania with HMDS does not, however, result in any sufficient hydrophobicity.
(Photocatalytic activity)
   Silica is not photocatalytically active. So it is unnecessary to consider any function which may lead to decomposition of resin components or pigment components of the toner.

On the other hand, titania indicates a photocatalytic activity although its intensity varies with the production process. Titania, therefore, decomposes resin components or pigment components of the toner to cause its deterioration.
(Fluidity)
   It is valid in general that the toner with silica added externally shows a satisfactory fluidity, which is superior especially immediately after still standing. On the other hand, the toner with titania added externally is superior in fluidity under dynamic conditions, but thickens after a long time of still standing to lose its fluidity.
(Tribo-chargeability of toner)
While surface-modified silica is capable of providing the toner with a high chargeability, it leads sometimes to the trouble of too much charge amount. In such a case, it is generally possible to control the chargeability by studying on the surface modifying agents. In comparison with other metal oxides, silica has as stated in the above a higher degree of freedom to select the surface modifying agents because of the high reactivity of its surface. Owing to the intrinsically high chargeability of the surface, however, it is difficult even by surface modification to obtain silica powder of a lowered chargeability with a stable quality. In addition, it is also disadvantageous that available surface modifying agents are limited if aiming to achieve both hydrophobicity and a lowered chargeability at the same time. A use of aminosilane or the like, for example, provides a lowered chargeability, but deprives hydrophobicity. Aminosilane is, therefore, used in general together with such surface modifying agents as HMDS, alkylsilane, silicone oil, etc. Since the number of reaction sites on the silica surface is restricted, however, a stringent limitation is placed on the ratio of modifying agents in order to retain both a low chargeability and a high hydrophobicity at the same time.

For reasons that titania is less chargeable and shows a lower volume resistivity than silica, surface-modified titania, when added to the toner externally, provides a small amount of tribo-charge to the toner. Furthermore, it is difficult with titania due to its poor reactivity to surface modification as stated in the above to adjust and to increase the amount of charge by surface modification. Titania is, therefore, used normally together with surface-modified silica so as to suppress the toner to a low chargeability level. This makes also an excellent effect expectable that the toner charging time becomes shorter than in case of external addition of only silica, what is attributable to the fast charge transfer due to the low volume resistivity of titania.

Among the said properties, the photocatalytic activity should be as low as possible in consideration of application to toners, powder coatings, etc. In contrast, it is desirable that the reactivity to surface modifying agents (tolerance to surface modification) is as high as possible and a high hydrophobicity is ensured after surface modification.

On the other hand, volume resistivity required for external additives as well as fluidity and tribo-chargeability required for toners vary in dependence on the equipment and process to be used.

Therefore, the present invention aims to provide; the surface-modified complex oxide particles which satisfy the said requirements and control the toner properties, the external toner additives which use the said surface-modified complex oxide particles and the toners to which the said additives are added externally.

### Means for solving the problems

As a result of intensive investigation, the inventors obtained the surface-modified complex oxide particles by surface-modifying silica-titania complex oxide particles produced by a dry process and came to the findings that the said surface-modified complex oxide forms an extremely superior external additive to toners to have completed the present invention. The present invention concerns namely (1) through (8) below:

(1) Surface-modified complex oxide particles which are obtained by surface-modifying silica-titania complex oxide particles produced by a dry process.

(2) Surface-modified complex oxide particles as described in (1), wherein the silica content in the said silica-titania complex oxide particles amounts to 10 % through 90 % by weight.

(3) Surface-modified complex oxide particles as described in (1), wherein the said surface modification is performed by means of hexamethyldisilazane (HMDS).

(4) Surface-modified complex oxide particles as described in (3), whose hydrophobicity according to methanol method amounts to 40 % or more.

(5) External toner additive containing the surface-modified complex oxide particles which are obtained by surface-modifying the silica-titania complex oxide particles produced by a dry process.

(6) A toner on which the external additive as described in (5) is added externally.

(7) A toner as described in (6), wherein the toner resin is a negatively charged styrene acryl resin or negatively charged polyester resin.

(8) A toner as described in (7), wherein the silica content in the said silica-titania complex oxide particles amounts to 5 % through 70 % by weight.

### Effect of the invention

The surface-modified complex oxide particles according to the present invention are effective as an excellent external additive capable of controlling the physical properties of toners.

### Brief description of drawings

[Fig. 1] Fig. 1 shows the structure of the silica-titania complex oxide particles produced by a dry process.
[Fig. 2] Fig. 2 shows the measurement results of tribo-charge for a toner sample with silica-titania complex oxide particles added externally which have a BET specific surface area of 50 m²/g_{.}
[Fig. 3] Fig. 3 shows the measurement results of tribo-charge for a toner sample with silica-titania complex oxide particles added externally which have a BET specific surface area of 90 m²/g_{.}
[Fig. 4] Fig. 4 shows the measurement results of tribo-charge for a toner sample of polyester resin with silica-titania complex oxide particles added externally which have a BET specific surface area of 90 m²/g.

### Best mode for carrying out the invention

### Surface-modified complex oxide particles

The present invention concerns surface-modified complex oxide particles obtained by surface-modifying silica-titania complex oxide particles produced by a dry process.

Silica-titania complex oxide particles by a dry process are produced, for example, in such manner that silicon tetrachloride gas and titanium tetrachloride gas are led together with an inert gas into the mixing chamber of a burner and mixed there with hydrogen and air to obtain mixed gas of a certain mixing ratio, which is then burnt in a reaction chamber at a temperature of 1,000 to 3,000 °C to generate silica-titania complex oxide particles which are cooled down and collected by means of a filter. As for more detailed manner of production, the methods described in WO2004/056927 and Tokuhyo 2006-511638 can be referred to.

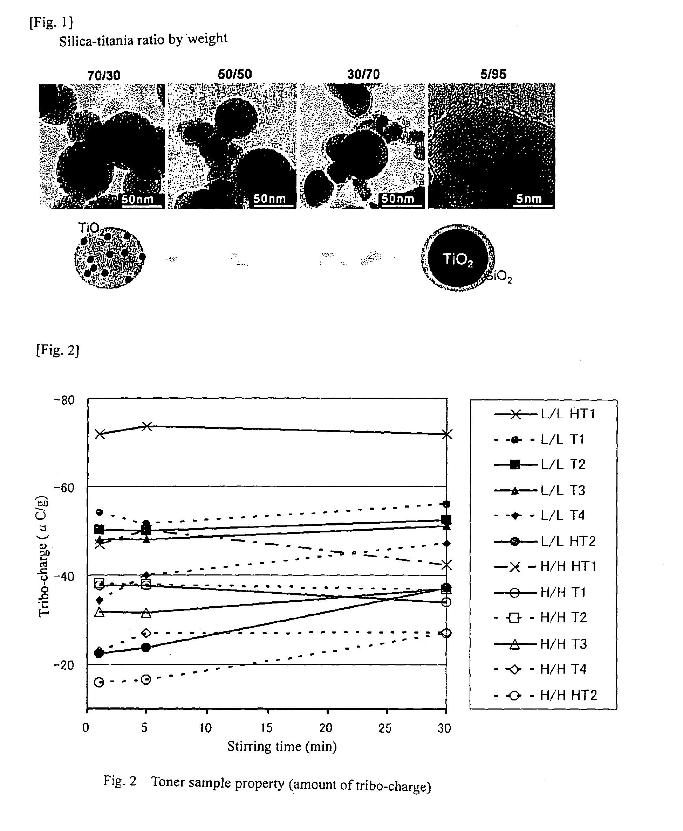

Fig. 1 is a TEM image of complex oxide particles obtained in the said production method. Complex oxide particles consisting of silica and titania at a ratio of 70:30 by weight have a structure in which titania particles are dispersed in silica particles. In contrast, complex oxide particles consisting of silica and titania at a ratio of 30:70 and 5:95 by weight have a core-shell structure comprising a core which is intrinsically composed of titania and a shell which is intrinsically composed of silica and covers the said core. In case of a silica-titania ratio of 50:50, both of the said structures exist together.

It has become obvious based on the findings by the inventors that the silica-titania complex oxide particles obtained by dry process show a volume resistivity lower than that of silica and higher than that of titania. Although the volume resistivity of an oxide is adjustable to a certain extent by surface modification, it depends strongly on the primary volume resistivity of the oxide. Since silica shows a high volume resistivity as stated in the above, it is difficult to control the tribo-charge of a toner by externally adding surface-modified silica to it. It is, therefore, common to use surface-modified silica in combination with surface-modified titania (by mixing). As titania shows a low volume resistivity, it becomes possible by externally adding surface-modified titania to a toner to control the tribo-charge of the toner which is not attainable by external addition of only surface-modified silica. In this case, however, an excessively low resistance value may lead to the problem of leakage of toner charge. On the other hand, the silica-titania complex oxide particles produced by a dry process indicate a volume resistivity lower than that of silica and higher than that of titania so that the tribo-charge of toner can be better controlled than with silica and titania added. Besides, it was difficult with a silica-titania mixture to realize an intermediate volume resistivity (e.g. approx. 10⁸Ω· cm) between those of silica and titania, but it is easy to realize with the silica-titania complex oxide.

The volume resistivity of the silica-titania complex oxide particles produced by a dry process should preferably be between 10⁷ and 10¹² Ω· cm, and more preferably between 10⁷ and 10¹¹ Ω· cm

Although not limited specially, the specific surface area of the silica-titania complex oxide particles produced by a dry process should preferably be between 1 and 450 m²/g, more preferably between 10 and 400 m²/g and much more preferably between 20 and 300 m²/g.

Although not limited specially, the surface modifying agents used for surface modification to obtain the silica-titania complex oxide particles according to the present invention include concretely silazanes, cyclic organosiloxanes, silicone oils and publicly known silane coupling agents.

Silazanes include hexamethyldisilazane (HMDS), hexaethyldisilazane, tetramethyldisilazane, hexabuthyldisilazane, hexapropylldisilazane, hexapenthyldisilazane, hexamethylcyclotrisilazane, 1,3-divinyltetramethyldisilazane, octamethylcyclotetrasilazane, divinyltetramethyldisilazane, etc.

Cyclic organosiloxanes include hexaphenylcyclotrisiloxane, octaphenylcyclotetrasiloxane, tetravinyltetramethylcyclotetrasiloxane, hexamethylcyclotrisiloxane, octamethylcyclotetrasiloxane, pentamethylcyclotetrasiloxane, tetramethylcyclotetrasiloxane, octamethylcyclotetrasiloxane, decamethylcyclopentasiloxane, dodecamethylcyclohexasiloxane, tetramethyltetrahydrogencyclotetrasiloxane, tetramethyltetraphenylcyclotetrasiloxane, tetramethyltetratrifluoropropylcyclotetrasiloxane, pentamethylpentatrifluoropropylcyclopentasiloxane, etc.

Silicone oils include organopolysiloxane, etc. from a low viscosity to a high viscosity such as dimethylpolysiloxane, methylphenylpolysiloxane, methylhydrogenpolysiloxane, methyltrimethicone, copolymer of methylsiloxane / methylphenylsiloxane, etc. In addition, it is also possible to use rubber-like dimethylpolysiloxanes of a high degree of polymerization, higher alkoxy modified silicones such as stearoxy silicones, etc., higher fatty acid modified silicones, alkyl modified silicones, amino modified silicones, fluorine modified silicones, etc.

It is also possible to use organopolysiloxanes which have a reactive functional group at one end or at both ends. Those organopolysiloxanes which are expressed by the following formula (1) are suitable for use:

Xa - (SiR₄O)ₙ - SiR₂ - Xb (1)

The 6 "R"s in the formula may be identical or different as an alkyl group consisting of methyl group or ethyl group, a part of which may be substituted by an alkyl group containing one of the functional groups incl. vinyl group, phenyl group and amino group. "Xa" and "Xb" may be identical or different. Reactive functional groups include halogen atom, hydroxyl group, alkoxy group, etc. "n" is an integer showing the degree of polymerization of siloxane linkage.

Silane coupling agents include, for example, 1,3-divinyltetramethyldisiloxane, 1,3-diphenyltetramethyldisiloxane, 3-aminopropyltrimethoxysilane, 3-aminopropylmethyldiethoxysilane, i-butyltriethoxysilane, i-buthyltrimethoxysilane, i-propyltriethoxysilane, i-propyltrimethoxysilane, N-β (aminoethyl) γ-aminopropyltrimethoxysilane, N-β (aminoethyl) γ-aminopropylmethyldimethoxysilane, n-octadecyltrimethoxysilane, N-phenyl-γ-aminopropyltrimethoxysilane, n-buthyltrimethoxysilane, n-propyltriethoxysilane, n-propyltrimethoxysilane, n-hexadecyltrimethoxysilane, o-methylphenyltrimethoxysilane, p-methylphenyltrimethoxysilane, tert-butyldimethylchlorosilane, α-chloroethyltrichlorosilane, β-(3,4-epoxycyclohexyl) ethyltrimethoxysilane, β-(3,4-epoxycyclohexyl) ethyltrimethoxysilane, β- chloroethyltrichlorosilane, γ-(2-aminoethyl) aminopropyltrimethoxysilane, γ-(2-aminoethyl) aminopropylmethyldimethoxysilane, γ-anilinopropyltrimethoxysilane, γ-aminopropyltriethoxysilane, γ-aminopropyltrimethoxysilane, γ-glycidoxypropyltrimethoxysilane, γ-glycidoxypropylmethyldiethoxysilane, γ-glycidoxypropylmethyldimethoxysilane, γ-chloropropyltrimethoxysilane, γ-chloropropylmethyldimethoxysilane, γ-methacryloxypropyltrimethoxysilane, γ-mercaptopropyltrimethoxysilane, aminopropyltriethoxysilane, aminopropyltrimethoxysilane, allyldimethylchlorosilane, allyltriethoxysilane, allylphenyldichlorosilane, isobutyltrimethoxysilane, ethyltriethoxysilane, ethyltrichlorosilane, ethyltrimethoxysilane, octadecyltriethoxysilane, octadecyltrimethoxysilane, octyltrimethoxysilane, chloromethyldimethylchlorosilane, diethylaminopropyltrimethoxysilane, diethyldiethoxysilane, diethyldimethoxysilane, dioctyl aminopropyltrimethoxysilane, diphenyldiethoxysilane, diphenyldichlorosilane, diphenyldimethoxysilane, dibuthylaminopropyldimethoxysilane, dibuthylaminopropyltrimethoxysilane, dibuthylaminopropylmonomethoxysilane, dipropylaminopropyltrimethoxysilane, dihexyldiethoxysilane, dihexyldimethoxysilane, dimethylaminophenyltriethoxysilane, dimethylethoxysilane, dimethyldiethoxysilane, dimethyldichlorosilane, dimethyldimethoxysilane, decyltriethoxysilane, decyltrimethoxysilane, dodecyltrimethoxysilane, triethylethoxysilane, triethylchlorosilane, triethylmethoxysilane, triorganosilyl acrylate, tripropylethoxysilane, tripropylchlorosilane, tripropylmethoxysilane, trihexylethoxysilane, trihexylchlorosilane, trimethylethoxysilane, trimethylchlorosilane, trimethylsilane, trimethylsilylmercaptan, trimethylmethoxysilane, trimethoxysilyl-γ-propylphenylamine, trimethoxysilyl-γ-propylbenzylamine, naphthyltriethoxysilane, naphthyltrimethoxysilane, nonyltriethoxysilane, hydroxypropyltrimethoxysilane, vinyldimethylacetoxysilane, vinyltriacetoxysilane, vinyltriethoxysilane, vinyltrichlorosilane, vinyltris (β-methoxyethoxy) silane, vinyltrimethoxysilane, phenyltriethoxysilane, phenyltrichlorosilane, phenyltrimethoxysilane, butyltriethoxysilane, butyltrimethoxysilane, propyltriethoxysilane, propyltrimethoxysilane, bromomethyldimethylchlorosilane, hexamethyldisiloxane, hexyltrimethoxysilane, benzyldimethylchlorosilane, pentyltrimethoxysilane, methacryloxyethyldimethyl (3-trimethoxysilylpropyl) ammonium chloride, methyltriethoxysilane, methyltrichlorosilane, methyltrimethoxysilane, methylphenyldimethoxysilane, monobutylaminopropyltrimethoxysilane, etc.

These surface modifying agents may be used independently or in combination with another agent or other agents.

Surface modification may be performed in publicly known methods. When a dry process is concerned, for example, a surface modifying agent may be sprayed onto the silica-titania complex oxide particles or be introduced in a vapor form into them while they are being stirred or are flowing. In a wet process, the complex oxide particles may be dispersed in a solvent like toluene, etc. and then heated or heated to reflux as required after addition of a surface modifying agent. Or they may further be heated at high temperatures after distilling away the solvent. No limitation applies to the method of surface modification as well when two or more surface modifying agents are used so that they may be put to the reaction either simultaneously or sequentially.

Although containing titania, the surface-modified complex oxide particles according to the present invention are featured by the fact that their photocatalytic activity is low. In other words, their photocatalytic activity is equivalent to that of silica even though they contain titania.

Concerning the surface-modified complex oxide particles according to the present invention, the photocatalytic activity should preferably be under 40 %, more preferably be under 20 %, and much more preferably be under 15 %.

Among the surface-modified complex oxide particles according to the present invention, especially those which are surface-modified by means of HMDS are featured by showing a high hydrophobicity (preferably 40 % or more, but more preferably 50 % or more according to methanol method) while retaining the properties of titania as stated in the above. Strict control of the tribo-charge of toner particles is indispensable for electrophotographic development using a dry toner. A difference between the amount of tribo-charge of toner particles under high-temperature / high-humidity conditions and that under low-temperature /low-humidity conditions must thus be minimized as far as possible. The charge amount of toner particles can be stabilized against environmental changes if the external additives have a high hydrophobicity.

Surprisingly, it was found further that the fluidity of a toner with the said particles added externally can easily be controlled by changing the silica-titania ratio of the silica-titania complex oxide particles. With increasing in the ratio of titania, the fluidity increased dependently from one close to silica to one close to titania. The fluidity may be evaluated on the basis of tapped bulk density, freely-settled bulk density or the ratio between the both. An addition of external additives leads to increase of both tapped and settled bulk density as well as increase of the fluidity of toner. However, those toners and external additives which indicate high values of the said properties are not always optimal for the entire electrophotographic processes. These properties are to be set by the user as required so that they may be optimal for each process and equipment in use. Fluidity control is, therefore, very important for the present electrophotographic processes. It is also possible to evaluate the fluidity of a toner by measuring the angle of repose.
Toner
   Another subject matter of the present invention is a toner with the surface-modified complex oxide particles added externally as stated in the above.

The toner according to the present invention can be obtained by mixing colored particles and the external additives according to the present invention by means of a high-speed stirrer like Henschel mixer, etc.

Colored particles contain a binder resin and a coloring agent. The method for producing them is subject to no special limitation, but they can typically be produced, for example, in pulverizing process (a process in which a coloring agent is molten into a thermoplastic resin as binder resin component and mixed with it for uniform dispersion to form a composition, which is then pulverized and classified to obtain the colored particles) or in polymerization process (a process in which a coloring agent is molten or dispersed into a polymerizable monomer as raw material for the binder resin and then suspended in a water-based dispersion medium containing a dispersion stabilizer after addition of a polymerization initiator and the suspension is heated up to a predefined temperature to initiate polymerization to obtain the colored particles by filtration, rinsing, dewatering and drying after completed polymerization).

The binder resins include resins which have widely been used for some time for toners such as, for example, polymers of styrene and its substitution products incl. polystyrene, poly-p-chlorostyrene, polyvinyl toluene, etc.; styrene copolymers incl. styrene-p-chlorostyrene, styrene-propylene, styrene-vinyltoluene, styrene-vinylnaphthalene, styrene-methyl acrylate, styrene-ethyl acrylate, styrene-buthyl acrylate, styrene-octyl acrylate, styrene-methyl methacrylate, styrene-ethyl methacrylate, styrene-buthyl methacrylate, styrene-α-methyl chloromethacrylate, styrene-acrylonitrile, styrene-vinylmethylether, styrene-vinylethylether, styrene-vinylmethylketone, styrene-butadiene, styrene-isoprene, styrene-acrylonitrile-indene, styrene-maleic acid, styrene-maleate, etc.; polymethyl methacrylate, polyvinyl chloride, polyvinyl acetate, polyethylene, polypropylene, polyester, polyurethane, poly amide, epoxy resins, polyvinyl butyral, polyacrylic resins, rosin, modified rosin, terpene resins, phenol resins, aliphatic resins or alicyclic hydrocarbon resins, aromatic petroleum resins, etc., which may be used independently or by mixture. Publicly known mold release agent, antistatic agent, etc. may further be added to the said resins within the range not departing from the purpose of the present invention.

Every pigment and/or dye incl. carbon black and titanium white can be used as the coloring agent contained in the colored particles. The colored particles may contain any magnetic material. The materials used here include iron oxides such as magnetite, γ-iron-oxide, ferrite, iron-excessive ferrite, etc.; metals such as iron, cobalt and nickel or alloys and their mixtures of the said metals with such metals as aluminum, cobalt, copper, lead, magnesium, tin, zinc, antimony, beryllium, bismuth, cadmium, calcium, manganese, selenium, titanium, tungsten, vanadium, etc.

Every toner according to the present invention can be used as it is, namely as a one-component toner. It can also be mixed with a carrier for use as a so-called two-component toner.

In electrophotographic process, it is required that the toner is instantaneously chargeable by friction with a charging stuff, and that the toner charge is stable in time and under environmental condition such as temperature and humidity. It has surprisingly become obvious that the toners of both styrene acrylic resin and polyester resin with the external additives of the present invention added are superior in the said charge stability.

The styrene-acrylic resins are copolymer of styrene and acrylate ester and/or methacrylate ester, and include, for example, styrene-methyl acrylate, styrene-ethyl acrylate, styrene-buthyl acrylate, styrene-octyl acrylate, styrene-methyl methacrylate, styrene-ethyl methacrylate, styrene-buthyl methacrylate, etc.

Polyester resins consist of polyhydric alcohol and polybasic acid and are obtained by polymerizing a monomer composition as required in which at least either polyhydric alcohol or polybasic acid contains a trivalent or polyvalent component (crosslinking component). These polyester resins can be synthesized by any ordinary process. Specifically, the reaction condition may be selected according to the reactivity of the used monomer such as reaction temperature (170 to 250 °C), reaction pressure (5 mmHg to ordinary pressure), etc. and to be stopped when the prescribed properties are attained.

The dihydric alcohols used for synthesizing the polyester resins include, for example, ethylene glycol, triethylene glycol, 1,2-propylene glycol, 1,3-propylene glycol, 1,4-butandiol, neopentyl glycol, 1,4-butendiol, 1,4-bis (hydroxymethyl) cyclohexane, bisphenol A, hydrogenated bisphenol A, polyoxyethylene bisphenol A, polyoxypropylene (2,2)-2,2'-bis (4-hydroxyphenyl) propane, polyoxypropylene (3,3)-2,2-bis (4-hydroxyphenyl) propane, polyoxyethylene (2,2)-2,2-bis (4-hydroxyphenyl) propane, polyoxypropylene (2,2)-2,2'-bis (4-hydroxyphenyl) propane, etc.

The trihydric or polyhydric alcohols involved in crosslinking the polyesters include, for example, sorbitol, 1,2,3,6-hexanetetrole, 1,4-sorbitan, pentaerythritol, dipentaerythritol, tripentaerythritol, sucrose, 1,2,4-butanetriol, 1,2,5-pentanetriol, glycerol, 2-methylpropanetriol, 2-methyl-1,2,4-butanetriol, trimethylol ethane, trimethylol propane, 1,3,5-trihydroxymethylbenzene, etc.

The polybasic acids include, for example, maleic acid, fumaric acid, citraconic acid, itaconic acid, glutaconic acid, phthalic acid, isophthalic acid, terephthalic acid, cyclohexanedicarboxylic acid, succinic acid, adipic acid, sebacic acid, azelaic acid, malonic acid, anhydrides of the said acids, lower alkyl ester or alkenylsuccinic acids such as n-dodecenylsuccinic acid, n-dodecylsuccinic acid,, etc., or alkylsuccinic acids and other divalent organic acids.

The trivalent or polyvalent polybasic acids involved in crosslinking the polyesters include, for example, 1,2,4-benzenetricarboxylic acid, 1,2,5-benzenetricarboxylic acid, 1,2,4-cyclohexanetricarboxylic acid, 2,5,7-naphthalenetricarboxylic acid, 1,2,4-naphthalenetricarboxylic acid, 1,2,5-hexanetricarboxylic acid, 1,3-dicarboxyl-2-methyl-2-methylenecarboxypropane, tetra (methylenecarboxyl) methane, 1,2,7,8-octanetetracarboxylic acid and the anhydrides of the above, etc.

### Examples

The present invention is explained in more detail in the following on the basis of examples. However, the present invention is not limited to these examples:

### 1. Method of preparing the samples for property evaluation

The sample preparation method in the individual examples is described in the following. The silica-titania complex oxide particles in each example were prepared in accordance with the method as described in WO2004/056927 and Tokuhyo 2006-511638. The single oxide particles (silica or titania) were prepared in accordance with publicly known methods. The specific surface area of the samples before surface modification was measured by the use of a high-speed surface area measuring instrument, SA 1100 (Shibata-Kagaku).

Unless otherwise specified, a commercially available, negatively charged two-component toner of styrene-acrylic resin (styrene-butyl acrylate copolymer : carbon black : low molecular polypropylene = 100 : 6 : 1 by weight) was used as the raw toner, which was produced by pulverizing process and had an average particle size of 8 µm.

(Example 1): Preparation of the surface-modified complex oxide particles (A1) 100 parts by weight of the complex oxide having a BET specific surface area of 50 m2/g and a silica-titania ratio of 70/30 (by weight) were put into a reaction container, into which 3 parts by weight of water and 10 parts by weight of HMDS were sprayed in nitrogen atmosphere. The reaction mixture was stirred for 2 hours at 150 °C, and then stirred for further 2 hours at 150 °C with nitrogen flow to dry. This was cooled down to obtain Surface-modified complex oxide particles A1.

(Example 2): Preparation of the surface-modified complex oxide particles (A2) Surface-modified complex oxide particles A2 were obtained in the same method as in Example 1 above except that 100 parts by weight of the complex oxide having a BET specific surface area of 50 m²/g and a silica-titania ratio of 50/50 (by weight) were used.

(Example 3): Preparation of the surface-modified complex oxide particles (A3) Surface-modified complex oxide particles A3 were obtained in the same method as in Example 1 above except that 100 parts by weight of the complex oxide having a BET specific surface area of 50 m²/g and a silica-titania ratio of 30/70 (by weight) were used.

(Example 4): Preparation of the surface-modified complex oxide particles (A4) Surface-modified complex oxide particles A4 were obtained in the same method as in Example 1 above except that 100 parts by weight of the complex oxide having a BET specific surface area of 50 m²/g and a silica-titania ratio of 5/95 (by weight) were used.

(Example 5): Preparation of the surface-modified complex oxide particles (A5) Surface-modified complex oxide particles A5 were obtained in the same method as in Example 1 above except that 100 parts by weight of the complex oxide having a BET specific surface area of 90 m²/g and a silica-titania ratio of 70/30 (by weight) were used.

(Example 6): Preparation of the surface-modified complex oxide particles (A6) Surface-modified complex oxide particles A6 were obtained in the same method as in Example 1 above except that 100 parts by weight of the complex oxide having a BET specific surface area of 90 m²/g and a silica-titania ratio of 50/50 (by weight) were used.

(Example 7): Preparation of the surface-modified complex oxide particles (A7) Surface-modified complex oxide particles A7 were obtained in the same method as in Example 1 above except that 100 parts by weight of the complex oxide having a BET specific surface area of 90 m²/g and a silica-titania ratio of 25/75 (by weight) were used.

(Example 8): Preparation of the surface-modified complex oxide particles (A8) Surface-modified complex oxide particles A8 were obtained in the same method as in Example 1 above except that 100 parts by weight of the complex oxide having a BET specific surface area of 90 m²/g and a silica-titania ratio of 15/85 (by weight) were used.

(Example 9): Preparation of the surface-modified complex oxide particles (A9) 100 parts by weight of the complex oxide having a BET specific surface area of 90 m²/g and a silica-titania ratio of 15/85 (by weight) were put into a reaction container, into which 10 parts by weight of dimethylpolysiloxane (50CS) was sprayed under the existence of nitrogen flow. The reaction mixture was stirred for 1 hour at 280 °C and cooled down to obtain Surface-modified complex oxide particles A9.

(Example 10): Preparation of the surface-modified complex oxide particles (A10) 100 parts by weight of the complex oxide having a BET specific surface area of 90 m2/g and a silica-titania ratio of 15/85 (by weight) were put into a reaction container, into which 3 parts by weight of water and 10 parts by weight of octyltrimethoxysilane were sprayed under the existence of nitrogen flow. The reaction mixture was stirred for 2 hours at 150 °C and cooled down to obtain Surface-modified complex oxide particles A10.

(Comparative Example 1): Preparation of the surface-modified silica particles (H1) Surface-modified silica particles H1 were obtained in the same method as in Example 1 above except that 100 parts by weight of silica having a BET specific surface area of 50 m²/g was used.

(Comparative Example 2): Preparation of the surface-modified titania particles (H2) Surface-modified titania particles H2 were obtained in the same method as in Example 1 above except that 100 parts by weight of titania having a BET specific surface area of 50 m²/g was used.

(Comparative Example 3): Preparation of the surface-modified silica particles (H3) Surface-modified silica particles H3 were obtained in the same method as in Example 1 above except that 100 parts by weight of silica having a BET specific surface area of 90 m²/g was used.

(Comparative Example 4): Preparation of the surface-modified titania particles (H4) Surface-modified titania particles H4 were obtained in the same method as in Example 1 above except that 100 parts by weight of titania having a BET specific surface area of 90 m²/g was used.

### (Example 11): Preparation of the toner samples (T1 - T4)

The raw toner was put into a Henschel type mixer to which External additive A1 were added so that the ratio of the toner and External additive A5 is 96.5 : 3.5 by weight. The mixture was stirred for 1 minute at 600 r.p.m. and further 3 minutes at 3,000 r.p.m. to disperse the external additive on the toner surface to yield Toner sample T1. T2 (toner sample with 3.5 % A2 added externally), T3 (toner sample with 3.5 % A3 added externally) and T4 (toner sample with 3.5 % A4 added externally) were prepared in the same method as above.

### (Example 12): Preparation of the toner samples (T5 - T10)

The raw toner was put into a Henschel type mixer to which External additive A5 were added so that the ratio of the toner and External additive A5 is 97.5 : 2.5 by weight. The mixture was stirred for 1 minute at 600 r.p.m. and further 3 minutes at 3,000 r.p.m. to disperse the external additive on the toner surface to yield Toner sample T5. T6 (toner sample with 2.5 % A6 added externally), T7 (toner sample with 2.5 % A7 added externally), T8 (toner sample with 2.5 % A8 added externally), T9 (toner sample with 2.5 % A9 added externally) and T10 (toner sample with 2.5 % A10 added externally) were prepared in the same method as above.

### (Example 13): Preparation of the toner samples (T11 - T14)

T11, T12, T13 and T14 were prepared, respectively, in the same method as that for T5, T6, T7 and T8 in Example 12 except that a commercially available, negatively charged two-component toner of polyester resin (polyoxyethylene (2,2)-2,2-bis (4-hydroxyphenyl) propane : terephthalic acid : trimellitic anhydride (benzen-1,2,4-tricarboxylic acid 1,2-anhydride) = 14.4 : 5.6 : 4)) (polyester : carbon black = 97 : 3 by weight) was used, which was produced by pulverizing process and had an average particle size of 7 µm.

### (Comparative Example 5): Preparation of the toner samples (HT1 and HT2)

The raw toner was put into a Henschel type mixer to which Surface-modified silica particles H1 were added so that the ratio of the toner and Surface-modified silica H1 may become 96.5 : 3.5 by weight. The mixture was stirred for 1 minute at 600 r.p.m. and further 3 minutes at 3,000 r.p.m. to disperse the external additive on the toner surface to yield Toner sample HT1. Toner sample HT2 with 3.5 % surface-modified titania particles H2 added externally were prepared in the same method as above.

### (Comparative Example 6): Preparation of the toner samples (HT3 and HT4)

The raw toner was put into a Henschel type mixer to which Surface-modified silica particles H1 were added so that the ratio of the toner and Surface-modified silica H1 may become 97.5 : 2.5 by weight. The mixture was stirred for 1 minute at 600 r.p.m. and further 3 minutes at 3,000 r.p.m. to disperse the external additive on the toner surface to yield Toner sample HT3. Toner sample HT4 with 2.5 % Surface-modified titania particles H4 added externally were prepared in the same method as above.

### (Comparative Example 7): Preparation of the toner samples (HT5 and HT6)

Toner samples (HT5 and HT6) were prepared in the same method as stated in the above except that a two-component toner of polyester resin (polyester : carbon black = 97 : 3 by weight) was used.

### 2. Methods of property evaluation

The methods for evaluating the properties of the samples obtained in the above are described in the following:

### (1) Method for measuring the property (volume resistivity) of oxide particles (before surface modification)

The volume resistivity of complex or single oxide particles was measured by the use of an electric resistance measuring instrument, Hiresta-UP MCP-PD-41 (Mitsubishi Chemical). Regarding silica-titania mixture, silica and titania (both having a BET surface area of 90 m²/g) were mixed and shaked in TURBULA mixer for 5 minutes to obtain a mixture, and the volume resistivity was measured by means of the electric resistance measuring instrument, Hiresta-UP MCP-PD-41 (Mitsubishi Chemical).

### (2) Methods for measuring the properties of surface-modified oxide particles The properties of the surface-modified oxide particles were measured in the following method, respectively:

### (2-1) Carbon content

Trace carbon analyzer, EMIA-110 (HORIBA), was used for the measurement.

### (2-2) Hydrophobicity according to methanol method 50 ml of pure water was put into a beaker (capacity: 200 ml) and 0.2 g of the surface-modified oxide particles were added. While stirring, methanol was added dropwise. The ratio (%) of methanol to the entire solvent at the moment when all the powder was suspended in the mixture was taken as the hydrophobicity.

### (2-3) Photocatalytic activity

The photocatalytic activity was determined through measurement of the activity against oxidation reaction of 2-propanol. The sample was suspended in 2-propanol and irradiated for 1 hour with UV light. The concentration of the generated acetone was then measured by means of gas chromatography and compared with the acetone concentration obtained by the use of titanium dioxide P25 (produced by Nippon Aerosil). In other words, the photocatalytic activity was obtained as the quotient of the acetone concentration determined when using a sample and the acetone concentration determined when using P25. The acetone concentration in mg/kg may be used as a measure of the photocatalytic activity of the sample since the formation of acetone can be described by a reaction of zero order kinetics according to the equation dc[Ac]/dt = k. Specifically, approx. 250 mg (accuracy: 0.1 mg) of each type of inorganic particles was suspended in 350 ml of 2-propanol (275.1 g) using Ultra-Turrax stirrer. This suspension was pumped through a cooler thermostatically controlled to 24 °C into a glass photoreactor previously flushed with oxygen. An Hg medium-pressure TQ718 type immersion lamp (Heraeus) with an output of 500 W was used as radiation source. A protective tube of boron silicate glass restricts the emitted radiation to wavelengths > 300 nm. The radiation source is surrounded externally by a cooling pipe through which water flows. Oxygen was metered into the reactor through a flow meter. The reaction was started when the radiation source was switched on. At the end of the reaction, a small amount of the suspension was immediately removed and filtered to quantitatively analyze the acetone concentration by means of gas chromatography.

### (3) Method for measuring the properties of the toner samples

The properties of the toner samples were measured in the following method, respectively:

### (3-1) Repose angle

The repose angle of each toner sample was measured by means of a powder tester, PT-S (Hosokawa Micron). Approx. 20 g of the toner sample was put on a 355-µm-mesh sieve so that the sample may fall through a funnel by vibration and accumulate on a circular table with a diameter of 8 cm placed approx. 6.5 cm below the tip of the said funnel. The angle of the lateral face to the horizontal plane of the conically accumulated toner sample was taken as the repose angle.

### (3-2) Tapped bulk density

Approx. 70 g of the toner or the toner over which the external additive was dispersed was put into a 250 ml measuring cylinder and tapped 1,250 times by the use of STAV2003 (Engelsman). The ratio of the sample weight to its volume after tapping was taken as the tapped bulk density.

### (3-3) Amount of tribo-charge of the toner

2 g of the toner sample and 48 g of ferrite carrier were put into a glass container (75 ml) and still stood for 24 hours in HH environment and in LL environment, respectively. HH environment means here an atmosphere having a temperature of 40 °C and a humidity of 85 %, while LL environment means an atmosphere having a temperature of 10 °C and a humidity of 20 %. After having been still stood for 24 hours in the said environment, respectively, the mixture was shaken for a prescribed time by means of TURBULA® shaker-mixer, respectively. Then, 0.2 g of this mixture was taken and air-blown for 1 minute by means of blowoff charge measuring device TB-200 (Toshiba Chemical) to obtain the charge amount of the toner composition.

### 3. Results of property evaluation

The results of property evaluation are given in the following for each sample:

### (1) Measurement results of the property (volume resistivity) of the oxide particles Table 1 gives the measurement results of volume resistivity for complex and single oxide particles (complex oxide particles, silica or titania) and silica-titania mixture.

[Table 1]

**(Table 1) Volume resistivity of the oxide particles**

| BET specific surface area | Silica-titania ratio | Volume resistivity of complex and single oxide particles (Ω· cm) | Volume resistivity of silica-titania mixture (Ω· cm) |
|---|---|---|---|
| | 100/0 | 1.0×10¹⁴ | - |
| | 70/30 | 3.8×10⁷ | - |
| | 50/50 | 4.4×10⁷ | - |
| 50 m²/g | 30/70 | 4.9×10⁸ | - |
| | 10/90 | 4.6×10⁷ | - |
| | 5/95 | 8.1×10⁶ | - |
| | 0/100 | 3.5×10⁵ | - |
| | 100/0 | 1.0×10¹⁴ | 1.0×10¹⁴ |
| | 97/3 | 1.2×10¹² | - |
| | 90/10 | 1.2×10¹⁰ | 6.4×10¹³ |
| | 80/20 | 7.3×10⁸ | 4.4×10¹³ |
| 90 m²/g | 70/30 | 6.0×10⁸ | 1.6×10⁸ |
| | 50/50 | 1.9×10⁸ | 9.1×10⁶ |
| | 30/70 | 2.1×10⁸ | 1.1×10⁶ |
| | 10/90 | 9.0×10⁷ | 3.6×10⁵ |
| | 0/100 | 3.0×10⁵ | 3.0×10⁵ |

As shown in Table 1, the volume resistivity of the complex oxide particles according to the present invention changes more largely than that of the single oxide particles even in case of a small percent of silica or titania content. It is also obvious that the value is stable in the range between 10⁷ and 10¹¹ (Ω· cm) over a wide range of silica content from about 10 % to 90 %. Furthermore, the volume resistivity is not dependant on the specific surface area of the complex oxide particles. On the other hand, it is difficult in the case of any silica-titania mixture to attain a stable property of the volume resistivity. It's because the range of composition (silica-titania ratio) having medium volume resistivity value is extremely narrow and the value changes drastically in the range.

### (2) Measurement results of the properties of the surface-modified oxide particles Table 2 gives the measurement results of the properties of the surface-modified oxide particles.

[Table 2]

**(Table 2) Properties of the surface-modified oxide particles**

| Code of samples surface-modified with HMDS | Carbon content (%) | Photocatalytic activity (%) | Hydrophobicity (%) |
|---|---|---|---|
| H1 | 0.66 | 6 | 74 |
| A1 | 0.58 | 9 | 60 |
| A2 | 0.60 | 8 | 60 |
| A3 | 0.71 | 6 | 61 |
| A4 | 0.69 | 39 | 53 |
| H2 | 0.67 | 54 | 0 |
| H3 | 0.98 | 3 | 69 |
| A5 | 1.01 | 2 | 62 |
| A6 | 1.08 | 2 | 65 |
| A7 | 1.07 | 7 | 62 |
| A8 | 0.90 | 7 | 60 |
| H4 | 0.73 | 46 | 21 |

| | | | |
|---|---|---|---|
| (Blank value: approx. 10%) | | | |

As shown in Table 2, silica, titania and silica-titania complex oxide particles having a similar BET specific surface area showed a similar carbon content by surface modification with HMDS. In other words, a reaction took place so that the density of trimethylsilyl group chemically adsorbed on the surface is nearly the same.

Besides, a high hydrophobicity of silica-titania complex was attained like silica especially by surface modification with HMDS, which is not possible in case of titania even by surface modification with HMDS. In other words, the silica-titania complex inorganic oxide particles showed a high hydrophobicity of methanol method even with a silica content of 5%, which is close to that of silica.

Titania (H2) retained approx. 50% of its photocatalytic activity even after surface modification with HMDS. In contrast, silica does not have photocatalytic activity.

The complex oxide particles were subject to a large reduction in their photocatalytic activity even with a silica content of only 5%.

The surface-modified complex oxide particles according to the present invention do not have photocatalytic activity with a silica content of 15% or more.

### (3) Measurement results of the properties of the toner samples

The measurement results of the properties (repose angle and tapped bulk density) of the toner samples are given in Table 3.

[Table 3]

**(Table 3) Properties of the toner samples (repose angle and tapped bulk density)**

| Toner sample code | Repose angle Repose angle | Tapped bulk density |
|---|---|---|
| HT1 | 39 | 527 |
| T1 | 34 | 530 |
| T2 | 34 | 533 |
| T3 | 28 | 532 |
| T4 | 30 | 540 |
| HT2 | 27 | 539 |
| HT3 | 34 | 516 |
| T5 | 33 | 530 |
| T6 | 31 | 541 |
| T7 | 30 | 552 |
| T8 | 26 | 566 |
| HT4 | 24 | 583 |
| Raw toner | 54 | 489 |

As shown in Table 3, both tapped bulk density and repose angle of the toner with the surface-modified complex oxide particles according to the present invention were externally added increased, depending to the ratio of titania, from one close to silica to one close to titania.

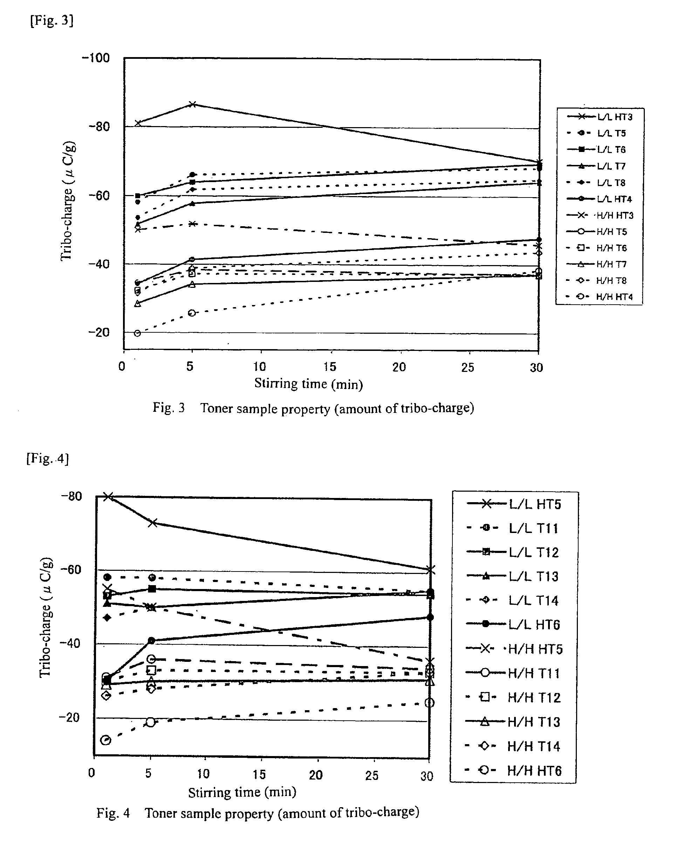

The measurement results of the amount of tribo-charge are shown in Figs. 2 and 3 (Fig. 2 concerns measurements for the samples having a BET specific surface area of 50 m²/g, while Fig. 3 concerns those for the samples having a BET specific surface area of 90 m²/g). In addition, the time-dependent change in the absolute value of tribo-charge is given in Tables 4, 5 and 6.

[Table 4]

**(Table 4) Time-dependent change in the absolute value of tribo-charge**

| Environment | Toner sample | Time-dependent change in the absolute value of tribo-charge (µC/g) | | |
|---|---|---|---|---|
| | | 5 min - 1 min | 30 min - 5 min | \|5 min - 1 min\| + \|30 min - 5 min\| |
| L/L | HT1 | 1.9 | -0.8 | 3.7 |
| L/L | T1 | -2.5 | 4.4 | 6.9 |
| L/L | T2 | -0.3 | 2.4 | 2.7 |
| L/L | T3 | 0.1 | 3.0 | 3.1 |
| L/L | T4 | 5.8 | 7.1 | 12.9 |
| L/L | HT2 | 1.2 | 13.4 | 14.7 |
| H/H | HT1 | 3.3 | -7.9 | 11.1 |
| H/H | T1 | 0.0 | -3.7 | 3.7 |
| H/H | T2 | -0.2 | -1.1 | 1.3 |
| H/H | T3 | -0.2 | 5.4 | 5.6 |
| H/H | T4 | 4.1 | 0.2 | 4.3 |
| H/H | HT2 | 0.7 | 10.6 | 11.3 |

[Table 5]

**(Table 5) Time-dependent change in the absolute value of tribo-charge**

| Environment | Toner sample | Time-dependent change in the absolute value of tribo-charge (µC/g) | | |
|---|---|---|---|---|
| | | 5 min - 1 min | 30 min - 5 min | \|5 min - 1 min\| + \|30 min - 5 min\| |
| L/L | HT3 | 5.4 | -16.2 | 21.7 |
| L/L | T5 | 7.9 | 2.1 | 10.0 |
| L/L | T6 | 4.0 | 5.5 | 9.5 |
| L/L | T7 | 6.0 | 6.4 | 12.4 |
| L/L | T8 | 8.2 | 3.0 | 11.2 |
| L/L | HT4 | 7.2 | 6.3 | 13.4 |
| H/H | HT3 | 1.8 | -6.0 | 7.8 |
| H/H | T5 | 3.9 | -1.4 | 5.2 |
| H/H | T6 | 4.8 | 0.0 | 4.9 |
| H/H | T7 | 5.7 | 2.9 | 8.5 |
| H/H | T8 | 7.3 | 4.8 | 12.1 |
| H/H | HT4 | 6.0 | 12.8 | 18.7 |

[Table 6]

**(Table 6) Time-dependent change of the absolute value of tribo-charge (polyester toner)**

| Environment | Toner sample | Time-dependent change of the absolute value of tribo-charge (µC/g) | | |
|---|---|---|---|---|
| | | 5 min - 1 min | 30 min - 5 min | \|5 min - 1 min\| + \|30 min - 5 min\| |
| L/L | HT5 | -7.0 | -12.0 | 19.0 |
| L/L | T11 | 0.0 | -3.0 | 3.0 |
| L/L | T12 | 2.0 | -1.0 | 3.0 |
| L/L | T13 | -1.0 | 5.0 | 6.0 |
| L/L | T14 | 3.0 | 5.0 | 8.0 |
| L/L | HT6 | 11.0 | 7.0 | 18.0 |
| H/H | HT5 | -5.0 | -14.0 | 19.0 |
| H/H | T11 | 5.0 | -2.0 | 7.0 |
| H/H | T12 | 3.0 | 0.0 | 3.0 |
| H/H | T13 | 1.0 | 1.0 | 2.0 |
| H/H | T14 | 2.0 | 5.0 | 7.0 |
| H/H | HT6 | 5.0 | 6.0 | 11.0 |

The toner samples with surface-modified silica added externally (HT1, HT3) indicated higher chargeability than the other toner samples under both H/H and L/L conditions. The chargeability lowered, however, when they were stirred for longer than 5 minutes. That is to say, the said toner samples showed a varying charge amount to prove to lack in stability. On the other hand, the toner samples (HT2, HT4) with surface-modified titania added externally indicated lower chargeability than the other toner samples under both H/H and L/L conditions. Their chargeability constantly increased in the whole stirring time up to 30 minutes to prove the lack of stability as well.

In the case of the toner samples using the surface-modified complex inorganic oxide particles according to the present invention, variation in chargeability was small for a stirring time between 5 minutes and 30 minutes. That is to say, they were stable in chargeability.

When using the complex oxide particles which silica content of 5 and 70 % or especially of 15 and 70 %, variation in chargeability in 5 to 30 minutes was obviously smaller than in the case of using single silica or titania particles for both BET surface area s of 50 and 90 m²/g. This proves that the complex oxide particles in the said composition range are quickly charged and then remain stable.

Especially, the polyester resin toner with the complex oxide particles according to the present invention added externally (Table 6) showed little variation in time in the absolute value of the tribo-charge amount, which proves that the toner is excellent.

### Industrial applicability

The surface-modified complex oxide particles according to the present invention are useful as the external additive applicable to various toners.

## Claims

1. Surface-modified complex oxide particles which are obtained by surface-modifying silica-titania complex oxide particles produced by a dry process.

2. Surface-modified complex oxide particles as described in Claim 1, wherein the silica content in the said silica-titania complex oxide particles amounts to 10 % through 90 % by weight.

3. Surface-modified complex oxide particles as described in Claim 1, wherein the said surface modification is performed by means of hexamethyldisilazane (HMDS).

4. Surface-modified complex oxide particles as described in Claim 3, whose hydrophobicity according to methanol method amounts to 40 % or more.

5. External toner additive containing the surface-modified complex oxide particles which are obtained by surface-modifying the silica-titania complex oxide particles produced by a dry process.

6. A toner on which the external additive as described in Claim 5 is added externally.

7. A toner as described in Claim 6, wherein the toner resin is a negatively charged styrene acryl resin or negatively charged polyester resin.

8. A toner as described in Claim 7, wherein the silica content in the said silica-titania complex oxide particles amounts to 5 % through 70 % by weight.
